(19) Europäisches Patentamt
European Patent Office
Office européen des brevets

(11) **EP 2 730 758 A1**

(12) **DEMANDE DE BREVET EUROPEEN**

(43) Date de publication:
**14.05.2014 Bulletin 2014/20**

(51) Int Cl.:
***F01L 11/04*** *(2006.01)*     ***F01L 11/02*** *(2006.01)*
***F01L 1/46*** *(2006.01)*     ***F01L 3/06*** *(2006.01)*

(21) Numéro de dépôt: **13192180.1**

(22) Date de dépôt: **08.11.2013**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **09.11.2012 FR 1260635**

(71) Demandeur: **Laumonier, Bryan**
**33185 LE Haillan (FR)**

(72) Inventeur: **Laumonier, Bryan**
**33185 LE Haillan (FR)**

(74) Mandataire: **Regimbeau**
**20, rue de Chazelles**
**75847 Paris Cedex 17 (FR)**

(54) **Piston à soupape intégrée**

(57) L'invention concerne un système à piston comportant un cylindre dans lequel coulisse un piston (30) définissant une première chambre (4a) et une seconde chambre (4b) à volume variable entre ledit piston (30) et le cylindre, le coulissement du piston (30) étant déterminé par la coopération entre ledit piston (30) et un système de transformation d'un mouvement rotatif en un mouvement linéaire, dans lequel ledit piston (30) est constitué d'un piston couronne (31) et d'un piston soupape (32), la position relative dudit piston couronne (31) et dudit piston soupape (32) déterminant l'ouverture ou la fermeture d'un orifice débouchant d'un canal (12) dans la première chambre (4a) entre le piston soupape (32) et le piston couronne (31), et la position relative dudit piston couronne (31) et dudit piston soupape (32) est déterminée par le mouvement du mécanisme de transformation de mouvement rotatif en un mouvement linéaire, et par des pressions régnant respectivement dans la première chambre (4a) et dans la seconde chambre (4b).

**FIG. 2**

**Description**

La présente invention a trait au domaine des systèmes à piston comportant un cylindre dans lequel coulisse un piston définissant une chambre à volume variable entre ledit piston et le cylindre, le coulissement du piston étant déterminé par la coopération entre ledit piston et un système de transformation d'un mouvement rotatif en un mouvement linéaire. Un tel système permet d'interagir avec un fluide dans la chambre, par exemple pour pomper, déplacer, compresser, détendre ledit fluide.

De tels systèmes à piston utilisent habituellement un dispositif annexe d'ouverture de la chambre pour admettre et refouler les fluides. Typiquement, on trouve dans un moteur à combustion des soupapes disposées au sommet de la première chambre, ou chambre de combustion, commandées en ouverture et en fermeture pour permettre l'admission des gaz frais et l'évacuation des gaz brûlés. On trouve ainsi généralement à la fois au moins une soupape d'admission qui sépare le conduit d'admission de la chambre de combustion, et au moins une soupape d'échappement qui sépare celle-ci du conduit d'échappement.

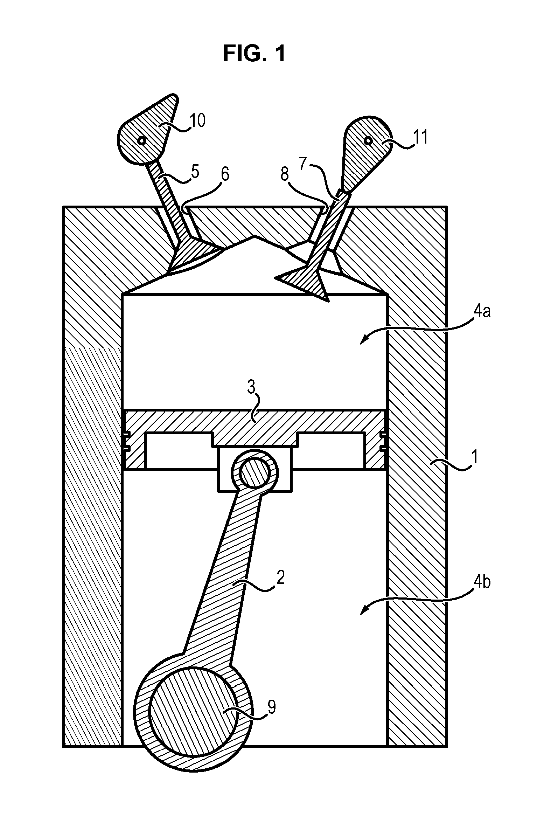

La figure 1 illustre un exemple d'un système de l'état de la technique, comportant cylindre 1, ou corps, dans lequel coulisse un piston 3 définissant une première chambre 4a à volume variable et une seconde chambre 4b entre ledit piston 3 et le cylindre 1, le coulissement du piston 3 étant déterminé par la coopération entre ledit piston 3 et une bielle 2 associée à un vilebrequin 9, également appelé manivelle. Typiquement, dans le cas d'un moteur à combustion, la première chambre 4a correspond à la chambre de combustion et la seconde chambre 4b correspond à la chambre d'embiellage, ou carter-cylindre, dans laquelle est logée la bielle 2.

Une soupape d'admission 5 est fermée, obturant le conduit d'admission 6, tandis qu'une soupape d'échappement 7 est ouverte, permettant la communication entre la première chambre 4a et le conduit d'échappement 8. Le système est donc ici dans une phase d'échappement. L'ouverture et la fermeture des soupapes 5, 7 sont commandées par des cames 10, 11 d'un arbre à cames éventuellement doté de complexes systèmes de déphase et de levée variable (non représenté).

La présence de tels dispositifs rend le système plus lourd, plus volumineux, moins fiable, moins polyvalent, moins flexible et plus énergivore, en raison de la perte d'efficacité. On utilise de plus les surfaces du cylindre 1 pour faire circuler les fluides d'admission et d'échappement qui les traversent, alors qu'elles pourraient servir à d'autres choses comme le refroidissement, le réchauffage, la circulation d'autres fluides. Enfin, la seconde chambre 4b, correspondant à la chambre d'embiellage, également appelée carter ou carter-cylindre et définie par l'espace sous le piston 3, est souvent inutilisée, ou seulement dans des moteurs deux temps et dans certaines pompes, tout comme la surface du piston 3 dans la première chambre 4a.

Des systèmes alternatifs ont pu être présentés. Par exemple, la demande de brevet WO 2005/075801 présente un système à piston, dans lequel une soupape dans le piston permet de mettre en communication la première chambre et la seconde chambre. Cependant, l'ouverture de cette soupape est contrôlée par un ressort, ce qui rend problématique la fiabilité et la mise au point d'un tel système, et ne permet que son utilisation dans une configuration de moteur deux temps. De plus, ce système nécessite un dispositif compliqué pour convertir le mouvement rotatif du vilebrequin en un mouvement linéaire : il est ainsi fait appel à une crosse et à une roue à planète.

Le certificat d'addition français au brevet n°433 775 présente un système à piston à double chambres de combustion dont l'une est interne au piston, c'est-à-dire qu'elle n'est pas définie entre le cylindre et le piston, et dans lequel l'ouverture d'un plateau soupape entre ces deux chambres de combustion est déterminée par la pression d'un ressort, et nécessite la présence de lumières radiales pour l'allumage et l'évacuation des gaz brûlés.

PRESENTATION DE L'INVENTION

L'invention vise à permettre d'améliorer l'admission et le refoulement de fluide dans la chambre à volume variable, tout en procurant un système plus simple, plus robuste et moins encombrant. Le piston est muni d'une ouverture spéciale qui s'ouvre et se ferme afin de faire entrer ou sortir le fluide de la chambre.

L'invention propose à cet effet un système à piston comportant un cylindre dans lequel coulisse un piston définissant une première chambre et une seconde chambre à volume variable entre ledit piston et le cylindre, le coulissement du piston étant déterminé par la coopération entre ledit piston et un système de transformation d'un mouvement rotatif en un mouvement linéaire, dans lequel ledit piston est constitué d'un piston couronne dans une zone périphérique dudit piston et d'un piston soupape dans une zone centrale dudit piston, en liaison glissière l'un par rapport à l'autre, et possédant tous deux une surface exposée à la première chambre, la position relative dudit piston couronne et dudit piston soupape déterminant l'ouverture ou la fermeture d'un orifice débouchant d'un canal dans la première chambre entre le piston soupape et le piston couronne, ledit canal mettant en communication la première chambre et la seconde chambre, et la position relative dudit piston couronne et dudit piston soupape est déterminée par

- le mouvement du mécanisme de transformation de mouvement rotatif en un mouvement linéaire, et
- des pressions régnant respectivement dans la première chambre et dans la seconde chambre.

L'invention est avantageusement complétée par les différentes caractéristiques suivantes prises seules ou selon leurs différentes combinaisons possibles :

- le système de transformation d'un mouvement rotatif en un mouvement linéaire coopère avec le piston soupape par une liaison interdisant tout mouvement de translation relatif entre au moins une partie dudit système de transformation et le piston soupape;
- le piston soupape est mobile en translation par rapport au piston couronne entre une position de fermeture dans laquelle il coopère avec le piston couronne au niveau d'une zone de butée haute pour fermer le canal par coopération de forme, et une position d'ouverture dans laquelle le canal est laissé libre;
- le système comprend en outre un système d'ouverture du canal indépendant de la position du système de transformation d'un mouvement rotatif en un mouvement linéaire, pour limiter l'écartement maximal du piston soupape et du piston couronne afin de limiter l'ouverture du canal;
- le piston couronne est libre en rotation par rapport au piston soupape;
- au moins une partie du piston soupape a une forme de tronc de cône complémentaire de la forme d'une partie du piston couronne avec laquelle elle coopère pour fermer le canal;
- le système comprend en outre un dispositif d'amortissement entre le piston couronne et le piston soupape;
- le dispositif d'amortissement est un ressort à spire fixé sur le piston soupape et dont la spire terminale est coupée brute pour induire une rotation du piston couronne.
- des moyens de génération de turbulences sont disposés dans le canal, ces moyens de génération de turbulence étant des ailettes au niveau du piston soupape ou des lumières orientées ménagées dans le piston couronne ;
- le piston soupape coulisse à l'intérieur du piston couronne le long d'au moins une paroi interne dudit piston couronne, ladite paroi interne constituant une surface d'appui radiale guidant le piston soupape pendant l'ensemble de son coulissement ;
- le système de transformation d'un mouvement rotatif en un mouvement linéaire est disposé dans la seconde chambre ;
- le système est configuré pour que le fluide passant par le canal (12) passe au niveau du système de transformation d'un mouvement rotatif en un mouvement linéaire ;
- le système est configuré pour que le fluide passant par le canal depuis la seconde chambre vers la première chambre passe d'abord au niveau du système de transformation d'un mouvement rotatif en un mouvement linéaire.

L'invention concerne également un moteur à combustion comportant un système à piston selon l'invention.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels:

- la figure 1, déjà commentée, illustre un système à piston de l'état de la technique;
- les figures 2 à 5 illustrent différentes étapes d'un cycle d'utilisation d'un système à piston selon un mode de réalisation possible de l'invention;
- les figures 6a, 6b et 6c représentent respectivement une vue de face, une vue selon la coupe A-A et une vue isométrique d'un piston couronne selon un mode de réalisation possible de l'invention:
- la figure 7 illustre une vue d'un piston soupape selon un mode de réalisation possible de l'invention;
- la figure 8 est un schéma illustrant une vue en coupe d'un piston couronne selon un mode de réalisation possible de l'invention;
- la figure 9 illustre un système à piston selon un mode de réalisation possible de l'invention, dans lequel le déplacement du piston soupape s'effectue dans la chambre à volume variable;
- la figure 10 est un schéma illustrant une vue partielle d'un système à piston muni d'un dispositif d'amortissement entre le piston soupape et le piston couronne selon un mode de réalisation possible de l'invention;

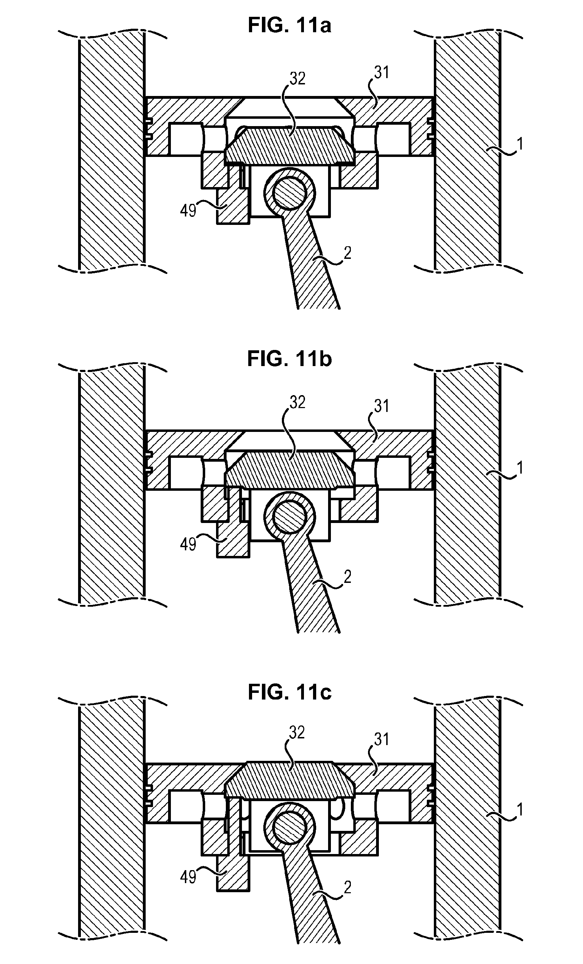

- les figures 11a, 11b et 11c illustrent une vue partielle d'un système à piston selon un mode de réalisation possible de l'invention, comprenant un système d'ouverture du canal indépendant de la position de la bielle, pour limiter l'écartement du piston soupape et du piston couronne afin de limiter l'ouverture du canal;
- La figure 12 illustre un exemple d'un piston soupape pourvu d'ailettes pour générer des turbulences;
- la figure 13 illustre un exemple d'un piston couronne 31 dont les lumières sont orientées pour générer des turbulences.

DESCRIPTION DETAILLEE

Dans la description qui suit, on prendra à titre d'exemple non limitatif un système avec un seul orifice d'admission et un seul orifice de refoulement, mais ils peuvent tous deux être multiples en fonction des besoins techniques, par exemple de débit. On prendra également comme exemple une machine qui transfert et prélève de l'énergie au fluide, comme dans le cas d'un moteur à combustion, mais la description reste valable pour une machine qui transforme l'énergie hydraulique ou pneumatique en énergie mécanique, ou ne fait que donner de l'énergie au fluide, comme dans le cas d'une pompe.

Typiquement, le système de transformation d'un mouvement rotatif en un mouvement linéaire que l'on trouve dans les systèmes à piston est un système bielle-manivelle, dans lequel un vilebrequin, ou manivelle, est connecté à une bielle par une liaison pivot excentrée par rapport à l'axe de rotation du vilebrequin, et la bielle est elle-même connectée par une liaison pivot au piston.

Un tel système de transformation d'un mouvement rotatif en un mouvement linéaire est le plus connu de l'homme du métier, mais il peut prendre d'autres formes, en fonction de la destination du système à piston. Par exemple, le système de transformation pourrait être constitué d'une pièce solidaire du piston et en liaison glissière avec le cylindre, avec une fente dans laquelle se déplace par translation l'excentrique du vilebrequin. On peut également envisager d'autres systèmes, tel qu'un système de crémaillère et de roue dentée.

Pour des raisons de simplicité, et parce qu'il est le plus courant, la description suivante sera faite de manière non limitative en référence des modes de réalisation dont le système de transformation d'un mouvement rotatif en un mouvement linéaire prend la forme d'un système bielle-manivelle.

Les orientations « haut » et « bas » font référence à une machine d'axe vertical, telle que dans la figure 1, et dont le vilebrequin est en bas, comme par exemple un moteur de voiture. La circulation des fluides est souvent phasée avec la position du piston. L'ouverture de la lumière d'échappement (phase de refoulement ou d'échappement) correspond à la diminution du volume de la première chambre lors de la montée du piston, tandis que l'ouverture de la lumière d'admission (phase d'admission) correspond à l'augmentation du volume de la première chambre par descente du piston.

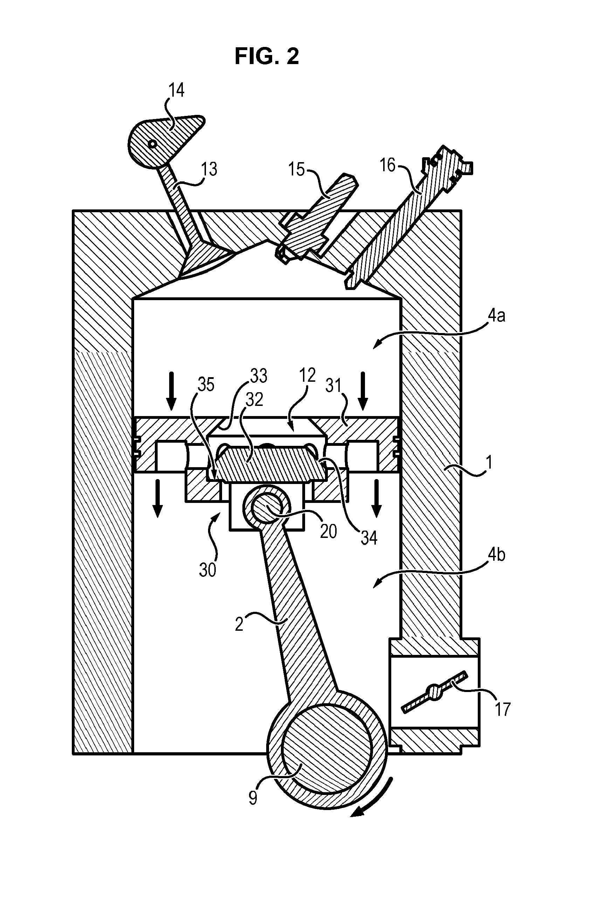

En référence aux figures 2 à 5, un système à piston selon un mode de réalisation possible de l'invention comporte un cylindre 1 dans lequel coulisse un piston 30 définissant une première chambre 4a et une seconde chambre 4b à volume variable entre ledit piston 30 et le cylindre 1, le coulissement du piston 30 étant déterminé par la coopération entre ledit piston 30 et une bielle 2 associée à un vilebrequin 9.

Le piston 30 est constitué d'un piston couronne 31 dans une zone périphérique dudit piston et d'un piston soupape 32 dans une zone centrale dudit piston 30, en liaison glissière l'un par rapport à l'autre, et possédant tous deux une surface exposée à la chambre.

Le piston soupape 32 coulisse à l'intérieur du piston couronne 31 le long d'au moins une paroi interne dudit piston couronne 31, ladite paroi interne constituant une surface d'appui radiale guidant le piston soupape pendant l'ensemble de son coulissement.

Le guidage du piston soupape 32 par le piston couronne 31 permet au mécanisme de transformation rotatif en un mouvement linéaire de présenter une structure simple, telle que le système bielle-manivelle présenté dans les figures.

De fait, le système autorise deux sens de rotation possible pour le mécanisme de transformation rotatif en un mouvement linéaire, de sorte qu'il est par exemple possible de faire tourner un moteur comportant un tel système à piston dans les deux sens.

En outre, la circulation du fluide peut se faire depuis la seconde chambre 4b vers la première chambre 4a, ou bien depuis la première chambre 4a vers la seconde chambre 4b.

La position relative dudit piston couronne 31 et dudit piston soupape 32 détermine l'ouverture ou la fermeture d'un orifice débouchant d'un canal 12 dans la première chambre 4a entre le piston soupape 32 et le piston couronne 31. Le canal 12 mettant en communication la première chambre 4a et la seconde chambre 4b.

La position relative dudit piston couronne 31 et dudit piston soupape 32 est déterminée par:

- le mouvement du mécanisme de transformation de mouvement rotatif en un mouvement linéaire, et
- par les pressions régnant respectivement dans la première chambre 4a et dans la seconde chambre 4b.

Le piston couronne 31 assure l'étanchéité du piston avec la chemise du cylindre 1, et constitue une partie de la surface du piston 30 en contact avec la première chambre 4a, ainsi qu'une partie du système de fermeture de l'orifice du fluide.

De préférence, le système de transformation d'un mouvement rotatif en un mouvement linéaire est disposé dans la seconde chambre 4b, et le système à piston est configuré pour que le fluide passant par le canal 12 depuis la seconde chambre 4b vers la première chambre 4a passe d'abord au niveau du système de transformation d'un mouvement rotatif en un mouvement linéaire. De la sorte, le fluide passant au niveau du système de transformation d'un mouvement rotatif en un mouvement linéaire peut servir à refroidir ou à lubrifier ledit système de transformation d'un mouvement rotatif en un mouvement linéaire.

Le piston soupape est lié au pied de bielle 2 par une liaison pivot, et constitue une partie de la surface en contact avec la première chambre 4a, ainsi qu'une autre partie du système de fermeture de l'orifice du fluide.

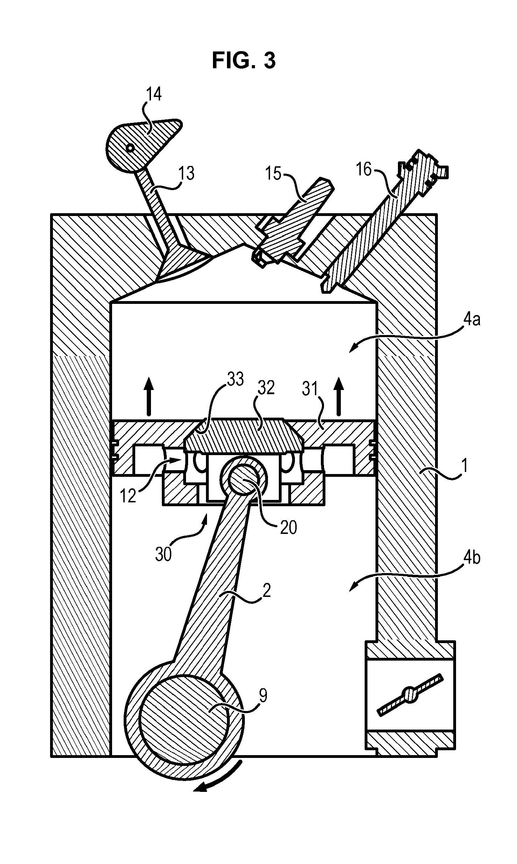

Le piston soupape 32 est mobile en translation par rapport au piston couronne 31 entre une position de fermeture dans laquelle il coopère avec le piston couronne 31 au niveau d'une zone de butée haute 33 pour fermer le canal 12 par coopération de forme, ainsi que représenté sur la figure 3, et une position d'ouverture dans laquelle le canal 12 est laissé libre, ainsi que représenté sur la figure 3.

Ainsi, de préférence, au moins une partie du piston soupape 32 a une forme de tronc de cône complémentaire de la forme d'une partie du piston couronne 31 avec laquelle elle coopère pour fermer le canal. La partie complémentaire du piston 31 forme alors la zone de butée haute 33.

Le système de transformation d'un mouvement rotatif en un mouvement linéaire est ici un système bielle-vilebrequin. Ce système de transformation coopère avec le piston soupape 32 par une liaison 20 interdisant tout mouvement de translation relatif entre au moins une partie dudit système de transformation 2 et le piston soupape 32. Ici, la bielle 2 est en liaison pivot avec le piston soupape 32 et avec un vilebrequin 9. La liaison pivot 20 entre le piston soupape 32 et la bielle 2 interdit tout mouvement de translation relatif entre ces pièces. Une telle configuration permet de simplifier la conception du système à piston, mais permet surtout de pouvoir commander directement par la pression de fonctionnement le déplacement relatif entre le piston soupape 32 et le piston couronne 31, donc l'ouverture du canal 12, sans qu'il soit nécessaire d'adjoindre un système d'ouverture dédié.

Le piston soupape 32 coulisse à l'intérieur du piston couronne 31 le long d'au moins une paroi interne dudit piston couronne 31, ladite paroi interne constituant une surface d'appui radiale guidant le piston soupape pendant l'ensemble de son coulissement.

De préférence, le piston couronne 31 est libre en rotation par rapport au piston soupape 32. Il peut par conséquent tourner autour de l'axe longitudinal du cylindre 1, ce qui limite les contraintes et l'usure entre le piston couronne 31 et le piston soupape 32.

Les figures 2 à 5 illustrent différentes étapes d'un cycle d'utilisation d'un mode de réalisation possible de l'invention. Dans le mode de réalisation illustré par ces figures 2 à 5, le système est un moteur à combustion interne à quatre temps dont l'échappement est classique avec une ou plusieurs soupape(s) 13, et l'admission se fait par le piston 30. On prend ici pour exemple un moteur à allumage commandé.

Le rôle de soupape d'admission est rempli par le piston soupape 32, qui prend la forme d'un tronc de cône, et est relié à la bielle 2 par une liaison pivot. Grâce à l'importante surface libre de la première chambre 4a, utilisée traditionnellement pour la circulation du fluide, on peut faire interagir facilement différents éléments avec la première chambre 4a, comme par exemple, un injecteur, une bougie ou encore un point chaud. Le système illustré comporte ainsi une bougie 15, d'un injecteur d'essence 16 placés en tête de cylindre au niveau de la première chambre 4a, ainsi qu'un papillon des gaz d'admission 17 au niveau de la seconde chambre 4b.

Le piston couronne 31 présent au niveau d'un évidement central constituant l'orifice débouchant du canal 12 une forme de tronc de cône extérieur complémentaire de celle du piston soupape 32.

La surface du piston 30 exposée à la première chambre 4a répond aux besoins thermodynamiques et de combustion. Dans l'exemple illustré par les figures 2 à 5, lorsque le canal 12 est obturé par le piston soupape, la surface du piston 30 est plate, mais celle-ci peut être en forme de bol.

Le piston soupape 32 est enfermé dans une cavité ménagée dans le piston couronne 31, ladite cavité permettant au moins un mouvement de translation entre le piston soupape 32 et le piston couronne 31 selon l'axe longitudinal du cylindre 1, définissant une liaison glissière entre ceux-ci. La liaison glissière assure le guidage du déplacement vertical relatif entre le piston soupape 32 et le piston couronne 31, et complète le positionnement des deux parties tronconiques l'une par rapport à l'autre.

La cavité du piston couronne 31, constituant l'orifice débouchant du canal 12 dans la première chambre 4a, et dans laquelle se déplace le piston soupape 32, est délimitée dans sa partie haute par la zone de butée haute 33, et dans la partie basse, par la zone de butée basse 35. Lorsque le piston soupape 32 est au plus bas, il est ainsi arrêté par la zone de butée basse 35 sur laquelle vient par exemple reposer un appui plan réalisé dans la masse du piston soupape 32. Cette position correspond à la pleine ouverture.

Des lumières sont ménagées dans le piston couronne 31 pour former le canal 12 de façon à mettre en communication la première chambre 4a et les gaz frais présents dans la seconde chambre 4b au moment de l'admission. Elles sont alternativement fermées puis ouvertes par le mouvement du piston soupape 32 par rapport au piston couronne 31.

Le système comporte également une soupape d'échappement 13 commandée par une came d'échappement 14. Un papillon 17 permet de commander l'admission de fluide dans la seconde chambre 4b constitué par l'espace sous le piston 30.

Dans le cas où une surpression intervient dans la première chambre 4a (par exemple si l'orifice qui se trouve sur le corps du cylindre 1 est fermé alors que le piston 30 monte, ou une combustion), le canal 12 dans le piston 30 peut rester fermé ou s'ouvrir en fonction de la répartition des surface utiles (surface dans la chambre) entre le piston soupape 32 et le piston couronne 31. On utilise donc le mouvement du piston 30 pour contrôler naturellement l'ouverture et la fermeture du canal 12 qui y est ménagé.

Dans la figure 2, le vilebrequin 9 entraîne la bielle 2 vers le bas. Ladite bielle 2 entraîne alors vers le bas le piston soupape 31 avec lequel elle est en liaison pivot 20. Le piston soupape 32 est alors à l'extrémité basse de sa course dans sa liaison glissière avec le piston couronne 31, et coopère avec une butée basse 35 du piston 31, ladite coopération entrainant vers le bas le piston couronne 31. Il s'agit donc d'une phase d'admission du fluide, depuis la seconde chambre 4b sous le piston 30 dans lequel se trouve la bielle 2 vers la première chambre 4a, à travers le canal 12.

Dans la figure 3, le système est représenté dans une phase de compression qui suit la phase d'admission. Le vilebrequin 9 a entrainé la bielle 2 vers le haut. La bielle 2 a transmis le mouvement ascendant au piston soupape 32 auquel elle est reliée par une liaison pivot 20, lequel piston soupape 32 a atteint l'extrémité haute de sa course dans sa liaison glissière avec le piston couronne 31.

Le piston soupape 32 est alors en butée avec la zone de butée haute 33 du piston couronne 31, par laquelle il entraîne ledit piston couronne 31 vers le haut. Le canal 12 est alors obturé, et la chambre est isolée de la seconde chambre 4b par le piston 30. La course vers le haut de ce piston 30 compresse les gaz présents dans la première chambre 4a.

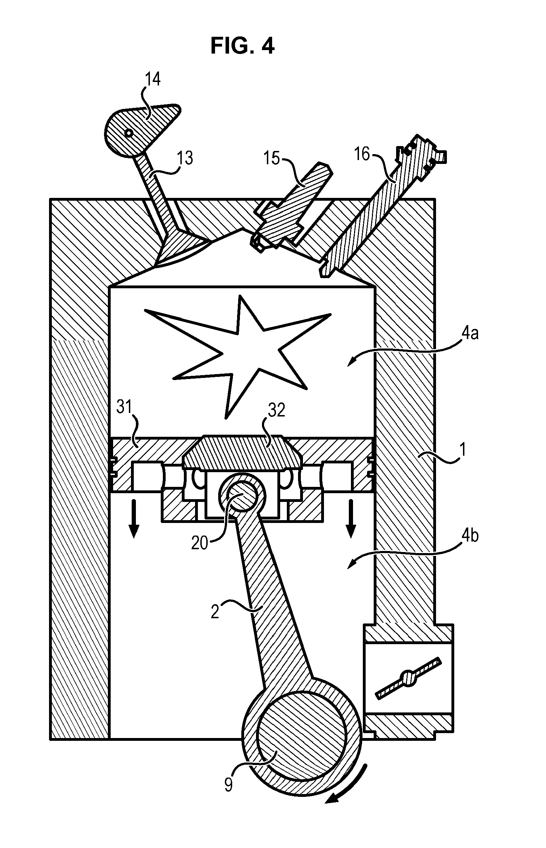

Dans la figure 4, une combustion dans la première chambre 4a résulte de l'allumage des gaz compressé par la bougie 15. La pression libérée par cette combustion entraîne le piston 30 vers le bas, communiquant cette énergie à la bielle 2, qui la transmet au vilebrequin 9. Le piston 30 atteint ensuite le point mort bas de sa course dans le cylindre 1, avant de remonter, entraîner par le vilebrequin 9 et la bielle 2.

Il est à cet égard nécessaire de dimensionner les surfaces respectives du piston couronne et du piston soupape exposées à la première chambre 4a afin que la course vers le bas du piston 30 pendant la phase de combustion-détente ne provoque pas l'ouverture du canal, en tenant compte des forces de frottement s'exerçant notamment sur le piston couronne.

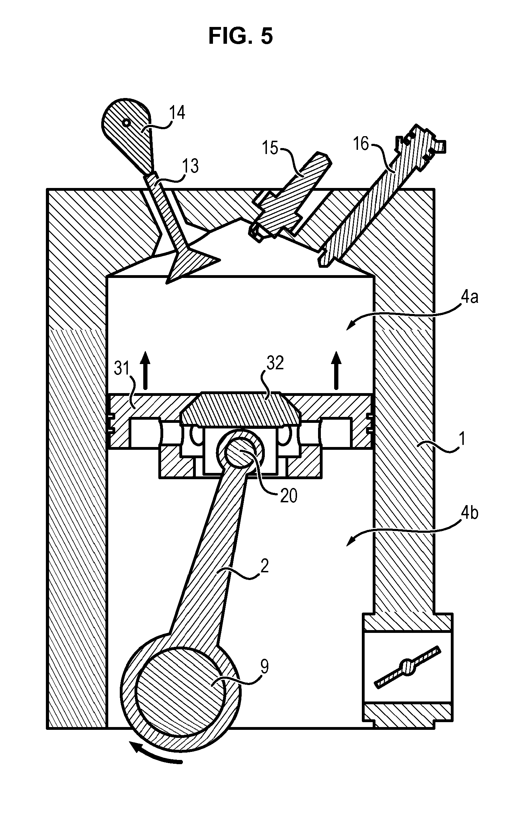

Dans la figure 5, le système est représenté dans une phase d'échappement, qui suit la combustion puis la remontée du piston 30. La soupape d'échappement 13 est alors ouverte, au moyen de la came d'échappement 14 afin de permettre l'échappement des gaz de combustion par le conduit d'échappement auparavant obturé par ladite soupape d'échappement 13.

Grâce à l'invention, le piston 30 intègre de façon compact la fonction d'ouverture et de fermeture d'un des orifices (admission ou échappement), sans forcément être assisté ni dépendant du débit ou de la pression du fluide, comme c'est le cas pour une pompe à piston et clapets classique.

L'intégralité de la surface fixe de la première chambre 4a est utilisable pour la circulation du fluide dans le sens complémentaire (admission ou refoulement) à celui assuré par le canal dans le piston. Par exemple, si on souhaite limiter au maximum les contacts entre le fluide qui quitte la première chambre 4a en fin de cycle, avec le fluide frais qui rentre, on peut optimiser l'emplacement de l'orifice ménagé dans le corps du cylindre 1 par rapport à l'orifice débouchant du canal 12 dans le piston 30. Par exemple, une soupape d'échappement placée au milieu de la première chambre 4a permet l'évacuation des gaz du cycle précédent sans mélange avec les gaz du cycle en cours.

De même, la surface du cylindre 1 au niveau de la première chambre 4a libérée par l'aménagement de la soupape au niveau du piston 30 est utilisable pour la gestion thermique du système. Par exemple, dans le cas d'un fluide que l'on compresse et qui ne doit pas surchauffer, une importante surface du cylindre 1 peut être en contact d'un manteau d'eau.

Notamment dans le cas de l'admission du fluide, la section de l'orifice débouchant du canal 12 peut être choisie maximale pour optimiser le remplissage, mais sans compromettre l'étanchéité dans les autres phases de fonctionnement avec admission fermée. La section d'échappement des fluides est augmentée grâce à l'espace libéré au niveau du cylindre 1 par rapport à un moteur classique, afin d'améliorer le balayage. L'injecteur 16 est placé selon les besoins de la combustion pour optimiser le jet, sans être gêné par des soupapes d'admission. La levée de la (ou des) soupapes d'échappement est diminuée grâce à l'augmentation de la section, et l'équipage mobile est moins sujet aux interférences en cas de casse d'un organe de distribution.

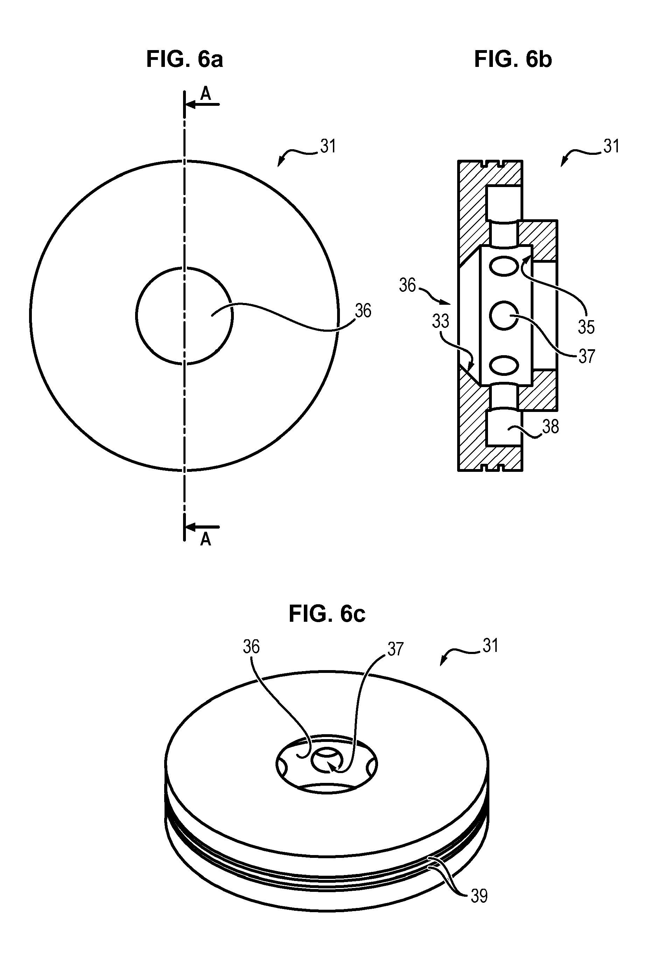

Les figures 6a, 6b et 6c représentent respectivement une vue de face, une vue selon la coupe A-A et une vue isométrique d'un piston couronne 31 selon un mode de réalisation possible de l'invention.

Vue de face comme dans la figure 6a, celui-ci présente une forme circulaire comportant en son centre une cavité 36 prenant également une forme circulaire, et qui permet la communication entre la première chambre 4a et la seconde chambre 4b.

La coupe selon A-A présentée sur la figure 6b permet de voir les lumières 37 débouchant dans la cavité 36 du piston couronne 31. Des conduits 38 prolongent ces lumières 37 pour constituer le canal 12 par lequel la première chambre 4a et la seconde chambre 4b peuvent communiquer.

La figure 6c monte une vue d'ensemble du piston couronne 31, avec les gorges de segments 39 pour assurer l'étanchéité de la liaison entre ledit piston couronne 31 et le corps du cylindre 1.

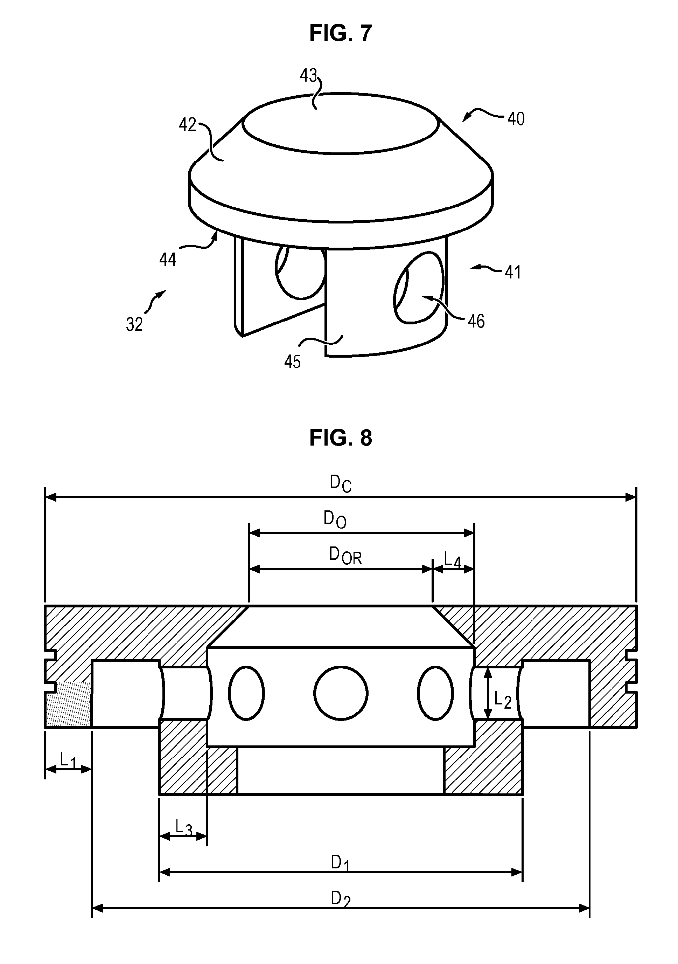

La figure 7 montre une vue d'un piston soupape 32 selon un mode de réalisation possible de l'invention. Le piston soupape 32 comprend deux parties, une partie supérieure 40 destinée à être logée dans la cavité 36 du piston couronne 31, et une partie inférieure 41 destinée à former une liaison pivot avec la bielle 2

La partie supérieure 40 comprend une partie tronconique 42 complémentaire de la conformation tronconique de la zone de butée supérieure 33 de la cavité 36 du piston couronne 31. La partie tronconique 42 est adaptée pour venir coopérer avec le piston couronne 31 afin d'obturer le canal 12.

Cette partie tronconique 42 est surmontée au niveau de son côté le plus petit d'une partie plate 43, dont la surface est destinée à être exposée à la première chambre 4a. Elle est ici représentée plate, mais peut bien sûr prendre d'autres forme, par exemple être creusée.

Du côté le plus large de la partie tronconique 42 se trouve un épaulement 44 destiné à coopérer avec la zone de butée basse 35 de la cavité 36 du piston couronne 31, lorsque le piston soupape 32 se trouve à l'extrémité basse de sa course relativement au piston couronne 31. C'est par cette coopération que le piston soupape 32 entraine vers le bas le piston couronne 31.

La partie inférieure 41 du piston soupape 32 comprend une 45 des deux parties de la chape munie d'un trou 46 au moyen duquel peut être réalisé la liaison pivot avec la bielle 2. Le diamètre du piston soupape 32 détermine la perméabilité de l'orifice du piston 30. Donc si on souhaite un débit important, il faut augmenter au maximum du diamètre de l'orifice débouchant ménagé dans le piston 30 (par exemple, pour une pompe).

Dans le cas où l'on doit favoriser le maintien de l'orifice débouchant fermé (par exemple, lors de la combustion dans un moteur à combustion interne à quatre temps), on pourra moduler la force F induite par la pression P régnant dans la première chambre 4a pour appuyer sur le piston couronne 31, en définissant la surface adéquat, la force F étant proportionnelle à la surface S selon $F = P \times S$.

Pour le cas du moteur à combustion, il y a donc un compromis à trouver qui dépend de nombreux paramètres: géométrie de la première chambre 4a, poids du piston couronne 31, force tangentielle du piston et des segments sur la chemise du cylindre 1, rapport longueur bielle/manivelle, pertes de charge à l'admission et à l'échappement, taux de compression etc... Les paramètres contextuels sont aussi à prendre en compte: densité de l'air, type d'huile, levée d'ouverture, phase de fonctionnement (points critiques comme le démarrage, le pied levé, les régimes élevés).

L'optimisation des tous ces paramètres doit amener à une section d'ouverture plus importante que celle d'un moteur à distribution classique équivalent, de l'ordre de 20 % au moins.

Par exemple, en référence à la figure 8, une première limite à prendre en compte est la tenue mécanique du piston couronne 31, avec une épaisseur $L_1$ de matière de la jupe de 5 à 10 mm. Une seconde limite est que la section transversale de passage du fluide entre le piston soupape 32 et le piston couronne 31 (entre $D_2$ et $D_1$ sur la figure 7) doit être au moins égale à la section d'ouverture à la surface du piston 30. Il en va de même pour la $L_2$ du canal, qui doit être suffisamment importante pour permettre le passage de fluide.

Notamment, de manière préférentielle afin de limiter les pertes de charge, la section transversale est de préférence la plus proche possible de section radiale. Par exemple, le diamètre intérieur $D_2$ du piston couronne 31 doit être supérieur au diamètre externe $D_1$ de la partie centrale du piston couronne 31 dans laquelle est logée l'ouverture accueillant le piston soupape 32 d'une valeur supérieure à celle de l'ouverture $D_0$ correspondant au diamètre de l'orifice débouchant du piston, soit D2-D1 $\geq D_0$. Quand l'épaisseur $L_3$ tend vers 0, soit $D_0 = D_1$, le diamètre intérieur $D_2$ du piston couronne 31 doit être supérieur au diamètre de l'ouverture $D_0$ ainsi qu'au diamètre externe $D_1$ de la partie centrale du piston couronne 31 dans laquelle est logée l'ouverture accueillant le piston soupape 32, multiplié par la racine de deux, soit

$$D2 \geq D1 \times \sqrt{2}$$

Par exemple, pour un piston avec un diamètre $D_c$ de 77 mm, avec une jupe de 6 mm d'épaisseur $L_1$, on obtient par minimisation de l'épaisseur $L_3$ entre le diamètre de l'ouverture $D_0$ et le diamètre externe $D_1$, un diamètre d'ouverture maximal de 46 mm. En comparaison avec des soupapes d'admission de 26 mm de diamètre dans une configuration classique, on constate une augmentation de 58%. Dans le cas d'une fermeture par tronc de cône, il faut néanmoins retrancher la longueur $L_4$ de la projection du tronc cône, pour obtenir l'ouverture réelle $D_{or}$.

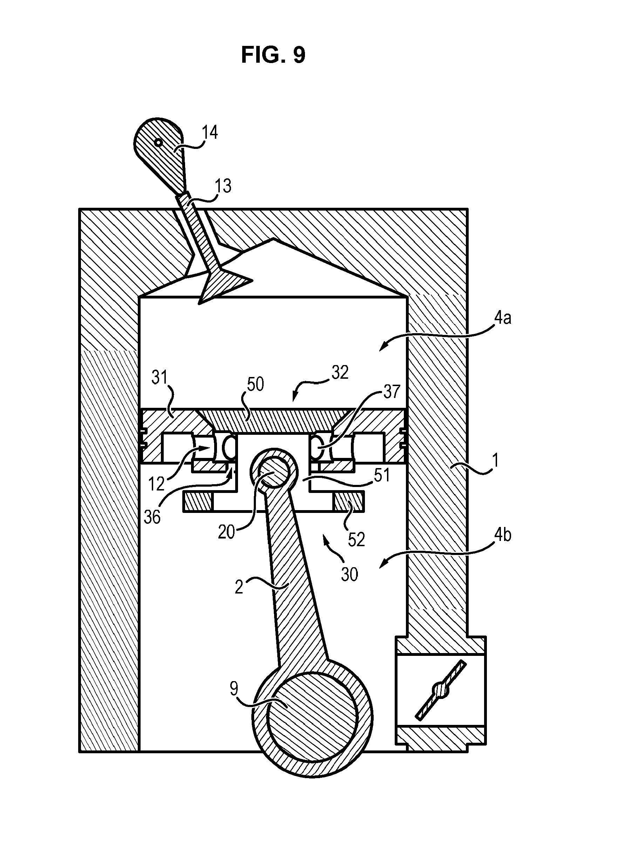

La figure 9 montre un système à piston selon un mode de réalisation possible de l'invention. Dans cette variante, le système fonctionne globalement de la même façon que pour le système illustré par les figures 2 à 5. Il s'en distingue par la conformation de son piston soupape 32 et de son piston couronne 31. Dans ce mode de réalisation, le piston couronne 31 accueille toujours le piston soupape 32 dans un évidement central constituant l'orifice débouchant du canal 12, mais lors de sa course par rapport au piston couronne 31, le piston soupape 32 fait saillie dans la première chambre 4a. Les positions du piston soupape 32 ouvrant et fermant l'orifice débouchant du canal 12 sont inversées : le canal 12 est ouvert lorsque le piston soupape 32 est en haut par rapport au piston couronne 31, et le canal 12 est fermé lorsque le piston soupape 32 est à l'extrémité basse de sa course par rapport au piston couronne 31.

Ce système à piston est constitué d'un piston couronne 31 dans une zone périphérique dudit piston 30 et d'un piston soupape 32 dans une zone centrale dudit piston 30, en liaison glissière l'un par rapport à l'autre, et possédant tous deux une surface exposée à la première chambre 4a, la position relative dudit piston couronne 31 et dudit piston soupape 32 déterminant l'ouverture ou la fermeture d'un orifice débouchant d'un canal 12 dans la première chambre 4a entre le piston soupape 32 et le piston couronne 31, et la bielle 2 est en liaison pivot avec le piston soupape 32 et avec un vilebrequin 9.

Le piston soupape 32 présente une partie tronconique 50 dont la partie large se trouve du côté de la surface exposée à la première chambre 4a. Cette partie tronconique 50 coopère avec une partie de réception du piston couronne 31 conformée de façon complémentaire avec ladite partie tronconique 50, lorsque le piston soupape 32 se trouve à l'extrémité basse de sa course dans sa liaison glissière avec le piston couronne 31, afin d'obturer le canal 12.

Le piston soupape 32 présente également une partie inférieure 51 au niveau de laquelle se situe la liaison pivot 20 avec la bielle 2. Un épaulement 52 fait saillie au niveau de la partie basse de la partie inférieure 51 afin de limiter la course du piston soupape 32 relativement au piston couronne 31.

Dans les différents modes de réalisation, en adaptant la seconde chambre (chambre d'embiellage également appelé carter 4b pour les moteurs à combustion) et l'embiellage lui-même (appelé également excentrique pour les systèmes simples) pour que le fluide soit en contact avec les pièces mobiles, le fluide peut lubrifier celui-ci s'il est suffisamment lubrifiant, ou bien en le rendant lubrifiant en ajoutant des additifs. Pour cela, on peut par exemple utiliser un brouillard d'huile dans le cas d'un gaz, ou installer un injecteur de lubrifiant dans la veine de liquide en amont des pièces à lubrifier.

Afin de nettoyer la chambre de l'embiellage 4b et préserver la santé mécanique (corrosion, pureté du lubrifiant) de l'embiellage ou encore de ne pas envoyer dans les nature les rejets de la machine, on peut l'isoler de l'extérieur (en concevant un carter étanche), à l'exception bien sûr du circuit de passage du fluide. Cela permet de nettoyer par balayage les impuretés qui s'y trouvent, par la circulation permanente du fluide dans la seconde chambre 4b. Les impuretés en question peuvent être par exemple des gaz de combustions dans le cas d'un moteur à combustion interne qui seront alors balayé par les gaz d'admission, ou encore des résidus crées par l'usure de l'embiellage, le lubrifiant de l'embiellage ou encore l'eau qui pourrait se trouver dans le fluide. De plus, d'éventuelles fuites au niveau de la segmentation dues à la surpression se retrouvent dans la seconde chambre 4b et seront admises dans la première chambre 4a au cycle suivant.

Le fluide peut être régulé en température pour contrôler la température du piston 30 et de l'embiellage : il faut apporter (ou retirer) les calories au fluide au moment où il entre dans le système, sachant qu'il sera en contact avec l'embiellage au cours du fonctionnement.

Il est possible de prévoir un dispositif additionnel de distribution de fluide, outre celui du piston 30, et qui permet de faciliter le dosage du fluide, ou d'améliorer le remplissage de la première chambre 4a. Par exemple, on peut ajouter une lumière ou une soupape qui s'ouvre en même temps que celle du piston 30 et qui permet de guider le flux du fluide.

Afin de limiter les chocs lors du contact qui se produisent au proche des points morts au niveau d'une butée, on peut concevoir un dispositif d'amortissement entre le piston soupape 32 et le piston couronne 31, au niveau de la butée. Par exemple, ce dispositif d'amortissement peut prendre la forme d'un ressort, ou d'un coussin d'huile alimenté par la lubrification de l'axe du piston 30.

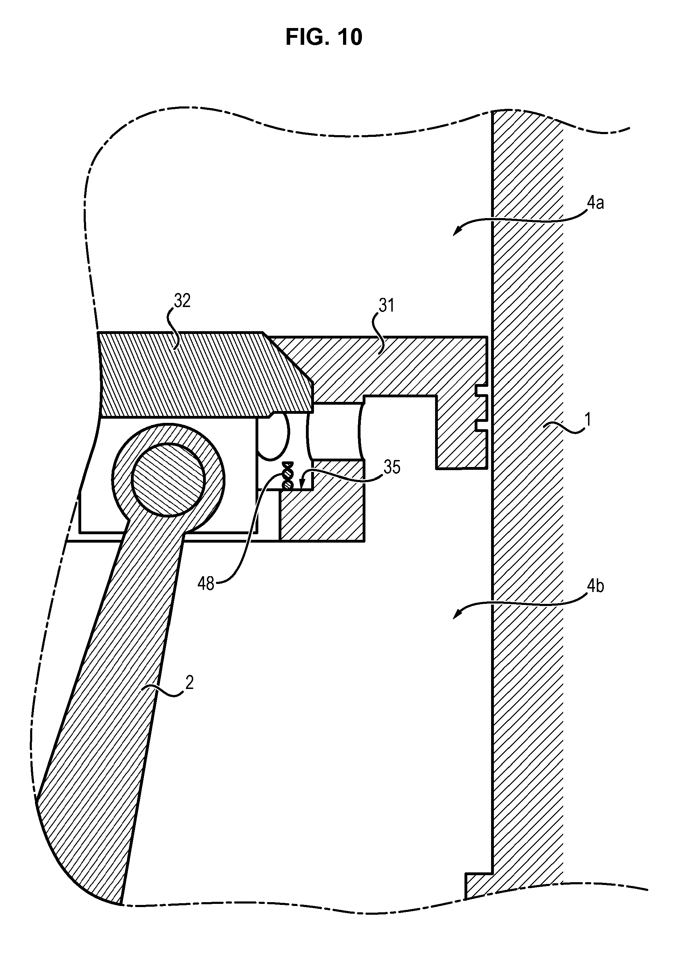

La figure 10 est une vue partielle d'un système à piston selon un mode de réalisation possible de l'invention comprenant un tel dispositif d'amortissement entre le piston couronne 31 et le piston soupape 32. Ce dispositif d'amortissement est un ressort 48, fixé au niveau de la zone de butée basse 35 du piston couronne 31, et s'étendant parallèlement à l'axe de déplacement du piston soupape 32. L'extrémité du ressort 48 est de préférence laissée libre, et le piston soupape 32 vient compresser ledit ressort 48 lorsque ledit piston soupape 32 arrive à proximité de l'extrémité basse de sa course par rapport au piston couronne 31.

De préférence, la spire terminal du ressort 48 est coupée brute, de sorte d'induire un déplacement du piston couronne 32 autour de l'axe du cylindre par l'action du piston soupape 32 sur ledit ressort 48, le piston couronne 31 étant libre en rotation par rapport au piston soupape 32. On peut également induire cette rotation avec un système d'indexation à dents de scie en disposé en cercle. La rotation du piston couronne 31 par rapport au piston soupape 32 permet par exemple d'homogénéiser la température, ou encore l'usure.

Afin de doser le débit pompé tout en limitant les pertes de charges, on peut prévoir en complément un système d'ouverture du canal 12 indépendant de la position de la bielle 2, pour forcer l'écartement maximale du piston soupape 31 et du piston couronne 32 afin de limiter l'ouverture du canal. Les figures 10a, 10b et 10c illustre un exemple dans lequel un système vis-écrous 49 d'axe vertical, motorisé, fixé au piston couronne 31, est commandable en extension afin de constituer une butée limitant la course vers le bas du piston soupape 32 par rapport au piston couronne 31. On obtient ainsi un axe rétractable qui limite l'ouverture de l'orifice débouchant en agissant sur le piston soupape 32, voire en le bloquant en position fermée. On peut prévoir d'autre système d'ouverture, par exemple une came de réglage reliée au vilebrequin ou encore un coussin d'huile ajustable par modulation de la pression dans le coussin d'huile.

Pour contrôler les mouvements du fluide dans la première chambre 4a, également appelés turbulence en moteur à combustion, ou dans la seconde chambre 4b pour un système dont l'échappement se fait par le canal 12 du piston 30, le piston soupape 32 et/ou le piston couronne 31 peuvent recevoir des dispositifs aérodynamiques faisant effet au moment du passage du fluide dans le canal 12. Ainsi, des moyens de génération de turbulences peuvent être disposés dans le canal 12, ces moyens de génération de turbulence étant par exemple des ailettes au niveau du piston soupape 32 ou des lumières orientées ménagées dans le piston couronne 31.

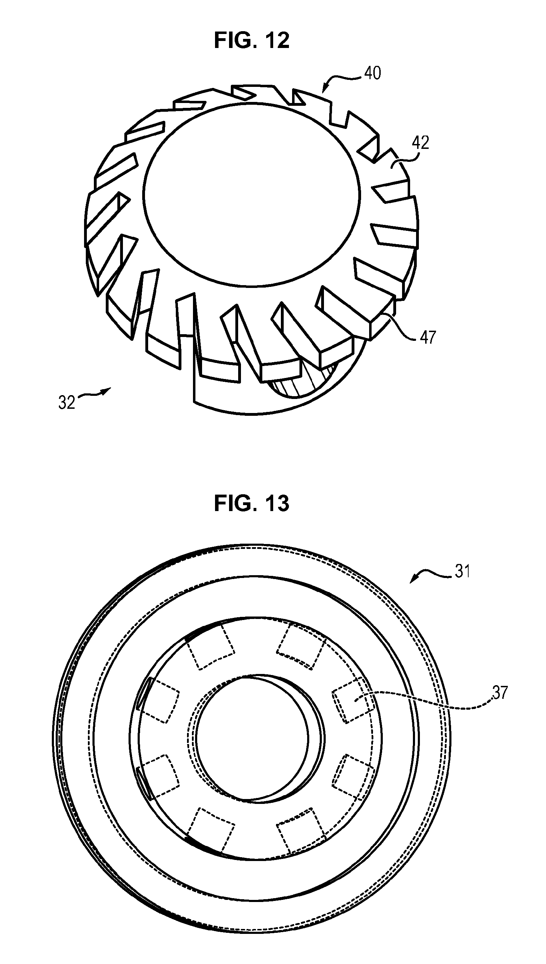

La figure 12 illustre un exemple d'un piston soupape 32 pourvu au niveau de sa partie supérieure 40, sur la partie basse de sa partie tronconique 42, d'ailettes 47 permettant de de donner un mouvement dit "swirl" au fluide. Ces ailettes peuvent être fabriquées par la réalisation de fentes dans la partie tronconique 42 du piston couronne 32, lesdites fentes ayant une orientation principalement radiale, avec une composante normale non nulle par rapport au rayon.

La figure 13 illustre un exemple d'un piston couronne 31 dans lequel les lumières 37 ont une orientation principalement radiale, avec une composante normale non nulle par rapport au rayon qui s'étend depuis l'axe du piston couronne 31. Cette orientation à composante normale des lumières 37 permet de donner un mouvement horizontal au fluide, également appelé swirl.

Les mêmes dispositifs que cités ci-dessus peuvent être utilisés pour contrôler la température (refroidissement ou réchauffage) du piston soupape 32 et/ou du piston couronne 31. Par exemple, on peut utiliser des ailettes 47 comme sur la figure 12, mais purement radiales.

## Revendications

1. Système à piston comportant un cylindre dans lequel coulisse un piston (30) définissant une première chambre (4a) et une seconde chambre (4b) à volume variable entre ledit piston (30) et le cylindre, le coulissement du piston (30) étant déterminé par la coopération entre ledit piston (30) et un système de transformation d'un mouvement rotatif en un mouvement linéaire,
**caractérisé en ce que** ledit piston (30) est constitué d'un piston couronne (31) dans une zone périphérique dudit piston (30) et d'un piston soupape (32) dans une zone centrale dudit piston (30), en liaison glissière l'un par rapport à l'autre, et possédant tous deux une surface exposée à la première chambre (4a),
la position relative dudit piston couronne (31) et dudit piston soupape (32) déterminant l'ouverture ou la fermeture d'un orifice débouchant d'un canal (12) dans la première chambre (4a) entre le piston soupape (32) et le piston couronne (31), ledit canal (12) mettant en communication la première chambre (4a) et la seconde chambre (4b),
et **en ce que** la position relative dudit piston couronne (31) et dudit piston soupape (32) est déterminée par

- le mouvement du mécanisme de transformation de mouvement rotatif en un mouvement linéaire, et
- des pressions régnant respectivement dans la première chambre (4a) et dans la seconde chambre (4b).

2. Système selon la revendication 1, dans lequel le système de transformation d'un mouvement rotatif en un mouvement linéaire coopère avec le piston soupape (32) par une liaison (20) interdisant tout mouvement de translation relatif entre au moins une partie dudit système de transformation (2) et le piston soupape (32).

3. Système à piston selon l'une des revendications 1 ou 2, dans lequel le piston soupape (32) est mobile en translation par rapport au piston couronne (31) entre une position de fermeture dans laquelle il coopère avec le piston couronne (31) au niveau d'une zone de butée haute (33) pour fermer le canal (12) par coopération de forme, et une position d'ouverture dans laquelle le canal (12) est laissé libre.

4. Système à piston selon l'une des revendications précédentes, comprenant en outre un système d'ouverture (49) du canal (12) indépendant de la position système de transformation, pour limiter l'écartement maximal du piston soupape (32) et du piston couronne (31) afin de limiter l'ouverture du canal (12).

5. Système à piston selon l'une des revendications précédentes, dans lequel le piston couronne (31) est libre en rotation par rapport au piston soupape (32).

6. Système à piston selon l'une des revendications précédentes, dans lequel au moins une partie du piston soupape (32) a une forme de tronc de cône complémentaire de la forme d'une partie du piston couronne (31) avec laquelle elle coopère pour fermer le canal (12).

7. Système à piston selon l'une des revendications précédentes, comprenant en outre un dispositif d'amortissement (48) entre le piston couronne (31) et le piston soupape (32).

8. Système à piston selon la revendication 7, dans lequel le dispositif d'amortissement (48) est un ressort à spire fixé sur le piston soupape et dont la spire terminale est coupée brute pour induire une rotation du piston couronne (31).

9. Système à piston selon l'une des revendications précédentes, dans lequel des moyens de génération de turbulences (37, 47) sont disposés dans le canal (12), ces moyens de génération de turbulence étant des ailettes (47) au niveau du piston soupape (32) ou des lumières orientées (37) ménagées dans le piston couronne (31).

10. Système à piston selon l'une des revendications précédentes, dans lequel le piston soupape (32) coulisse à l'intérieur du piston couronne (31) le long d'au moins une paroi interne dudit piston couronne (31), ladite paroi interne constituant une surface d'appui radiale guidant le piston soupape pendant l'ensemble de son coulissement.

11. Système à piston selon l'une quelconque des revendications précédentes, dans lequel le système de transformation d'un mouvement rotatif en un mouvement linéaire est disposé dans la seconde chambre (4b).

12. Système à piston selon la revendication précédente, ledit système étant configuré pour que le fluide passant par le canal (12) passe au niveau du système de transformation d'un mouvement rotatif en un mouvement linéaire.

13. Système à piston selon la revendication précédente, ledit système étant configuré pour que le fluide passant par le canal (12) depuis la seconde chambre (4b) vers la première chambre (4a) passe d'abord au niveau du système de transformation d'un mouvement rotatif en un mouvement linéaire.

**14.** Moteur à combustion comportant un système selon l'une quelconque des revendications précédentes.

# FIG. 1

## FIG. 2

## FIG. 3

# FIG. 4

## FIG. 5

## FIG. 6a

A

31

36

A

## FIG. 6b

31

36

33

35

37

38

## FIG. 6c

36

37

31

39

## FIG. 7

## FIG. 8

# FIG. 9

# FIG. 10

# FIG. 11a

# FIG. 11b

# FIG. 11c

## FIG. 12

## FIG. 13

| Europäisches Patentamt / European Patent Office / Office européen des brevets | **RAPPORT DE RECHERCHE EUROPEENNE** | Numéro de la demande EP 13 19 2180 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2004/067929 A1 (SIC TIHOMIR [YU]; VIDAKOVIC MILADIN [YU]) 12 août 2004 (2004-08-12) * le document en entier * ----- | 1,3,4, 6-8, 10-14 | INV. F01L11/04 F01L11/02 F01L1/46 F01L3/06 |
| X | WO 2005/075801 A1 (KANOZSAY STEFAN [SK]) 18 août 2005 (2005-08-18) | 1-3,5-8, 14 | |
| Y | * le document en entier * ----- | 4,9 | |
| Y | EP 2 503 116 A1 (WAERTSILAE SCHWEIZ AG [CH]) 26 septembre 2012 (2012-09-26) * le document en entier * ----- | 4 | |
| Y | DE 10 2007 001515 A1 (SCHNEIDER GESENKSCHMIEDE [DE]) 17 juillet 2008 (2008-07-17) * le document en entier * ----- | 9 | |
| Y | WO 2006/019223 A1 (HONG YOUNG-PYO [KR]) 23 février 2006 (2006-02-23) * le document en entier * ----- | 9 | DOMAINES TECHNIQUES RECHERCHES (IPC) |
| Y | US 6 260 530 B1 (KEON JR JOSEPH J [US]) 17 juillet 2001 (2001-07-17) * le document en entier * | 9 | F01L F02B |
| A | FR 16 197 E (OSKAR FREIBERG [DE]) 4 décembre 1912 (1912-12-04) * le document en entier * ----- | 1 | |

Le présent rapport a été établi pour toutes les revendications

| Lieu de la recherche | Date d'achèvement de la recherche | Examinateur |
|---|---|---|
| La Haye | 15 janvier 2014 | Klinger, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

EP 2 730 758 A1

**ANNEXE AU RAPPORT DE RECHERCHE EUROPEENNE**
**RELATIF A LA DEMANDE DE BREVET EUROPEEN NO.**

EP 13 19 2180

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-2014

| Document brevet cité au rapport de recherche | Date de publication | Membre(s) de la famille de brevet(s) | Date de publication |
|---|---|---|---|
| WO 2004067929 A1 | 12-08-2004 | AU 2003303833 A1<br>WO 2004067929 A1 | 23-08-2004<br>12-08-2004 |
| WO 2005075801 A1 | 18-08-2005 | AUCUN | |
| EP 2503116 A1 | 26-09-2012 | CN 102691565 A<br>EP 2503116 A1<br>JP 2012202403 A<br>KR 20120108911 A | 26-09-2012<br>26-09-2012<br>22-10-2012<br>05-10-2012 |
| DE 102007001515 A1 | 17-07-2008 | AUCUN | |
| WO 2006019223 A1 | 23-02-2006 | JP 2008514841 A<br>KR 20060015995 A<br>US 2009050104 A1<br>WO 2006019223 A1 | 08-05-2008<br>21-02-2006<br>26-02-2009<br>23-02-2006 |
| US 6260530 B1 | 17-07-2001 | AUCUN | |
| FR 16197 E | 04-12-1912 | AUCUN | |

EPO FORM P0460

**RÉFÉRENCES CITÉES DANS LA DESCRIPTION**

**Documents brevets cités dans la description**

- WO 2005075801 A
- FR 433775